# EUROPEAN PATENT APPLICATION

(11) **EP 0 863 638 A2**
(43) Date of publication of application: **09.09.1998**
(21) Application number: 97310271.8
(22) Date of filing: 18.12.1997
(51) Int. Cl.: H04L 12/24

(54) **Data access method and apparatus for communications network**

(30) Priority: 04.03.1997 US 811012
(71) Applicant: NORTHERN TELECOM LIMITED, Montreal, Quebec H2Y 3Y4 (CA)
(72) Inventor: Burn-Thornton, Kathryn Elizabeth, Ivybridge, Devon, PL21 0HT (GB); Riches, David Stephen, High Wycombe, Buckinghamshire, HP12 4QQ (GB); Tansley, Dennis Stewart William, Braintree, Essex (GB)
(74) Representative: Franks, Robert Benjamin

(57) **Abstract**

A data monitoring apparatus for monitoring a communications network comprises a processor; a data storage medium; a graphical user interface; a plurality of communications ports for communicating with network elements, eg switches, cross-connects; a data visualization module; a navigation engine module for searching data; a data extraction engine module for accessing and obtaining data for data sources including the data storage medium and said network elements; a task engine module for filtering a search of data, a graph engine module for preparing data into graphical format, a module for controlling the other modules and an intelligent help module to guide a user of the apparatus. A management information base stores a network model data and technology model data which is arranged in the data visualizer module into a three dimensional data space. Network elements are represented at discrete data locations within a 3D data space of the data storage medium.

## Description

### Field of the Invention

The present invention relates to the field of communications networks comprising a plurality of network elements, and particularly although not exclusively to a method and apparatus for monitoring and accessing of data describing a communications network.

### Background to the Invention

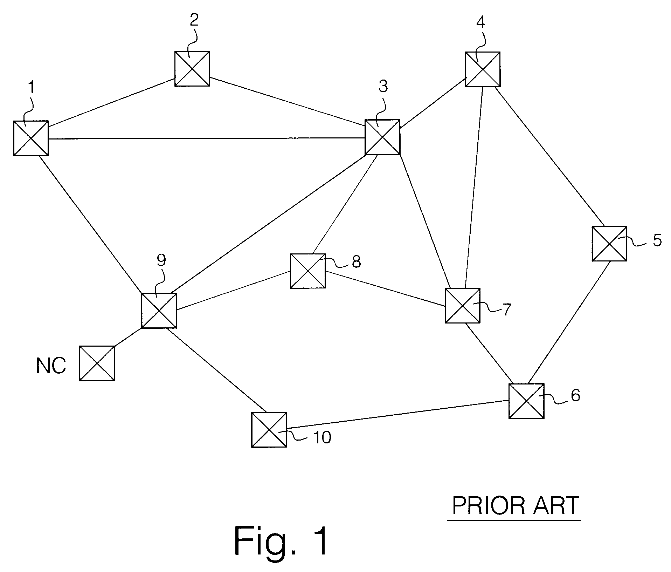

Conventional communications networks, for example a POTS (plain old telephone system), a wireless network, or a computer network, eg a network operating on transmission control protocol/internet protocol (TCP/IP) method comprises a plurality of node devices, for example switches, base stations, or computers, linked by a plurality of link devices, for example optical fiber cables, copper twisted wires, terrestrial wireless links comprising microwave transmitters, or extraterrestrial satellite link equipment. Typically, a communications network may comprise several different types of node device and several different types of link device in the same network. Referring to Fig. 1 herein, there is shown schematically a prior art communications network comprising ten node devices 1-10 connected by a multiplicity of links, each comprising one or more link devices. In general, as new communications services become available a communications network develops to accommodate additional volume of traffic and additional connections demanded by users. Devices are upgraded with newer, more modern equipment, resulting in disparities in performance and traffic carrying capacities between different node devices of the same network. In a multi-service environment, there are increasing bandwidth requirements and increased connectivity requirements from network users. Individual node devices may become overloaded, and individual link devices may become saturated, leading to congestion on the network.

To maintain usability of the network, it is important to identify node and link devices which are working at or near their full capacity, and to identify equipment which is performing inefficiently or below its full specified capacity. Additionally, when service problems are encountered on the network there is a need to respond to enquiries from network user customers to quickly identify the technical cause of any problems which a network customer may be experiencing.

In a multi-service communications network there may be a large number of node and link devices comprising the network and the volume of data traffic carried across the network is enormous. Further different node devices may be manufactured by different manufacturers resulting in different types of performance data being available from node to node, describing different performance characteristics relating to operation of individual node devices. Thus, there is a considerable problem in identifying and accessing information describing operation of a communications network, and such tools as do exist require skilled engineers to understand their operation and to interpret the data obtained.

In the field of visualization algorithms and techniques exist for investigating a 3-D state of behavior using computer graphics. Visualization: *The Look of Reality*. R S Gallagher, IEEE Spectrum pp. 49-56, November 1994. Visualization techniques have been used to represent what is going on inside a three dimensional object, and to represent that behavior graphically on a computer screen. In some such visualization techniques, there exist Voxels, being cuboid entities, which are used to represent points in a physical object. In addition to containing information on 3-D positions of points of the physical object, Voxels can also be used to store data relating to those physical points. The use of Voxel techniques allow users to be presented with a rendered three dimensional image on a display monitor, and to be able to interactively investigate a physical object in a layered manner through a computer generated graphics image.

### Summary of the Invention

One object of the present invention is to enable efficient monitoring and diagnosis of data describing operations of a communications network, through efficient arrangement of data describing the communications network, in a multi-dimensional space.

Another object of the present invention is to identify and access real time data, historical data and predicted data relating to operation of a communications network from a single user location, in an efficient and easily understandable manner.

It is a further object of the present invention to enable monitoring and access of data describing operation of network elements at varying levels of detail, throughout the whole of a communications network.

It is a further object of the present invention to enable monitoring of data describing operation of a communications network, involving inspection of data relating to operation of a plurality of network elements at the same time.

It is a further object of the present invention to enable a flexible customizable way of visually surveying combinations of network performance data, of a communications network comprising a plurality of different node device types in a range of formats

It is a further object of the present invention to provide a set of two dimensional and three dimensional interactive visualization services to a user, or other apparatus, which will allow sophisticated context and user role dependent visualization of data combinations for the support of problem solving and decision making in a communications network.

It is a further object of the present invention to convert complex and large amounts of raw data arising from broadband communications networks into an accessible and navigable form, so that a clearer view of the network can be obtained by network operators.

According to one aspect of the present invention there is provided a method of processing data representing a communications network comprising a plurality of network elements, said method comprising the steps of:
partitioning a data storage medium into a multi-dimensional data space comprising a plurality of data locations; and
for each network element, representing said network element at a said data location.

Preferably said method comprises the steps of:
dividing said data storage medium into a plurality of data levels, each said data level comprising a plurality of said data locations.

Further advantageous features of preferred implementations are as recited in claims 2 to 14 herein.

According to a second aspect of the present invention, there is provided a method of monitoring data describing operation of a communications network comprising a plurality of network elements, said method comprising the steps of:
for each network element, representing said network element, as a data location in a multi-dimensional data space;
at each data location, storing information identifying a set of data sources at which are available data describing operation of said respective corresponding network element;
identifying at least one network element and its corresponding data locations;
selecting an operational parameter of said identified network elements for monitoring; and
accessing at least one said data source corresponding to said identified data location(s) to obtain data describing said selected operational parameter of said identified network elements.

According to a third aspect of the present invention, there is provided a method of searching data describing a communications network comprising a plurality of network elements, said method comprising the steps of:
partitioning a data storage medium into a multi-dimensional data space having a plurality of data dimensions, said data dimensions comprising a plurality of data locations;
for each network element, representing said network element as at least one said data location; and
searching said multi-dimensional data space by navigating through data locations within a said dimension and by navigating through data locations from a said dimension to another said dimension.

Further advantageous features of preferred implementations are recited in claims 17 to 21 herein.

According to a fourth aspect of the present invention, there is provided a monitoring apparatus for monitoring a communications network comprising a plurality of network elements, said apparatus comprising:
a data storage medium partitioned into a multi-dimensional data space comprising a plurality of data dimensions, each comprising a plurality of data locations; and
a searching means for navigating between said data locations of said data storage medium,
   wherein said searching means operates to navigate between data locations within a said dimension and operates to navigate between data locations across different said dimensions.

The invention includes a communications apparatus as recited in claim 23 herein.

The invention includes a network monitoring apparatus as recited in claim 24 herein.

According to a fifth aspect of the present invention there is provided a method of storing data representing a communications network comprising a plurality of network elements, said method comprising the steps of:
for each network element, representing said network element as a data location in a multi-dimensional data space; and
at each data location, storing information identifying a set of related data locations corresponding to related network elements associated with said network element.

### Brief Description of the Drawings

For a better understanding of the invention and to show how the same may be carried into effect, reference will now be made to the accompanying diagrammatic drawings which illustrate by way of example only, preferred method, processes and embodiments according to the invention, and in which:
Fig. 2 illustrates schematically a communications network including specific embodiments according to the present invention and in which operates specific methods according to the present invention;
Fig. 3 illustrates schematically a prior art layered structure of an asynchronous transfer mode (ATM) wide area network;
Fig. 4 illustrates schematically a relationship between services, connections and equipment in an ATM network;
Fig. 5 illustrates schematically a collection of virtual channel connections, and virtual paths in a prior art transmission path across an ATM network.
Fig. 6 illustrates schematically an architecture of a network monitoring apparatus according to a specific embodiment of the present invention;
Fig. 7 illustrates conceptually a functional overview of the apparatus of Fig. 6;
Fig. 8 illustrates schematically an internal data accessing and transfer feature of the apparatus of Fig. 6;
Fig. 9 illustrates conceptually an architecture of a data storage medium comprising the apparatus of Fig. 6;
Fig. 10 illustrates conceptually storage of data signals within the data storage medium;
Fig. 11 illustrates an example of a three dimensional screen display produced by the apparatus of Fig. 6;
Fig. 12 illustrates an example of a Star plot screen display produced by the apparatus of Fig. 6;
Fig. 13 illustrates conceptually linking of stored data within a structure of the data storage medium;
Fig. 14 illustrates conceptually a method of storing data within another structure of the data storage medium;
Fig. 15 illustrates conceptually a relationship between data storage areas in the data storage medium;
Fig. 16 illustrates schematically an arrangement of stored data within the data storage medium;
Fig. 17 illustrates another arrangement of stored data within the data storage medium;
Fig. 18 illustrates a data processing method for implementing an architecture of the data storage medium;
Fig. 19 illustrates an information model applicable for control of a processor of the apparatus of Fig. 6, for performing data processing operations according to specific methods of the present invention, and embodying structures and architectures of the data storage medium;
Fig. 20 illustrates a method of monitoring a communications network, implemented as data processing operations carried out by the apparatus of Fig. 6;
Fig. 21 illustrates schematically a functional overview of elements of the apparatus of Fig. 6;
Fig. 22 illustrates a search routine method implemented by the elements of Fig. 21;
Fig. 23 illustrates one example of a display generated by the apparatus of Fig. 6 for operating the apparatus of Fig. 6;
Fig. 24 illustrates a data processing operation for searching said data storage medium;
Figs 25 and 26 illustrates further examples of displays generated by the apparatus of Fig. 6.
Fig. 27 illustrates schematically a further data processing operation for searching the data storage medium;
Fig. 28 illustrates a further data processing operation for searching the data storage medium;
Fig. 29 illustrates an information model for configuring the apparatus of Fig. 6 to perform specific data processing methods described herein; and
Fig. 30 illustrates schematically data processing steps for operating an intelligent help module of the apparatus of Fig. 6.

### Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however to one skilled in the art, that the present invention may be practiced without using these specific details. In other instances, well known methods and structures have not been described in detail so as not to unnecessarily obscure the present invention.

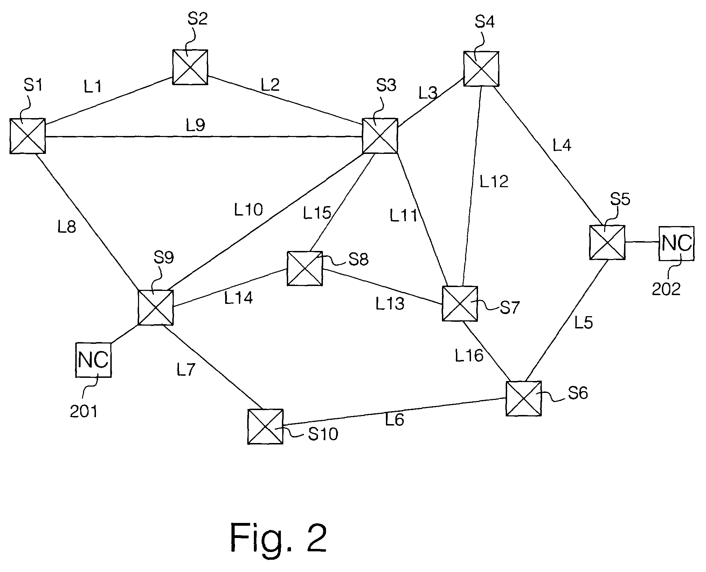

Referring now to Fig. 2 of the accompanying drawings, there is shown a communications network comprising a plurality of node devices in the form of switches S1-S10, linked by a plurality of link devices comprising links L1-L14. Communications data traffic is input to the switches S1-S10 via customer equipment connected to the switches, and traverses the network via the links L1-L14. In a multi-service environment, the network may carry many types of data, with many different connectivities, for example a service provider may distribute data from customer equipment connected to a single node device to customer equipment connected to many other node devices (point to multi-point), or a user of the network may communicate from customer equipment at one node device to another (point to point), or from a plurality of customer equipments at a plurality of nodes to another plurality of customer equipments at another plurality of nodes (multi-point to multi-point). Usage of the network is difficult to predict under multi-service conditions, and some node devices become congested due to the volume of communications data traffic passing through them.

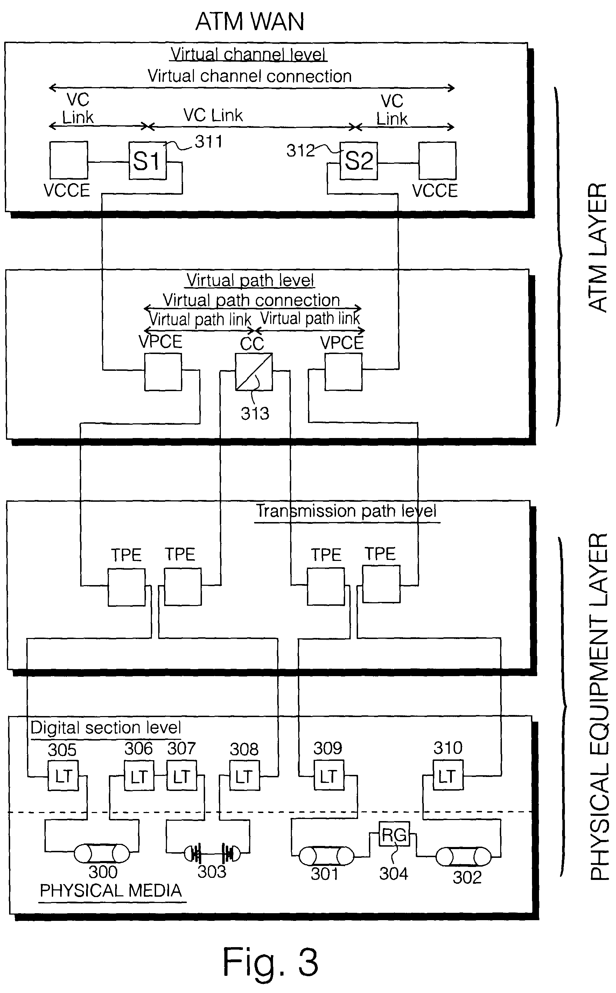

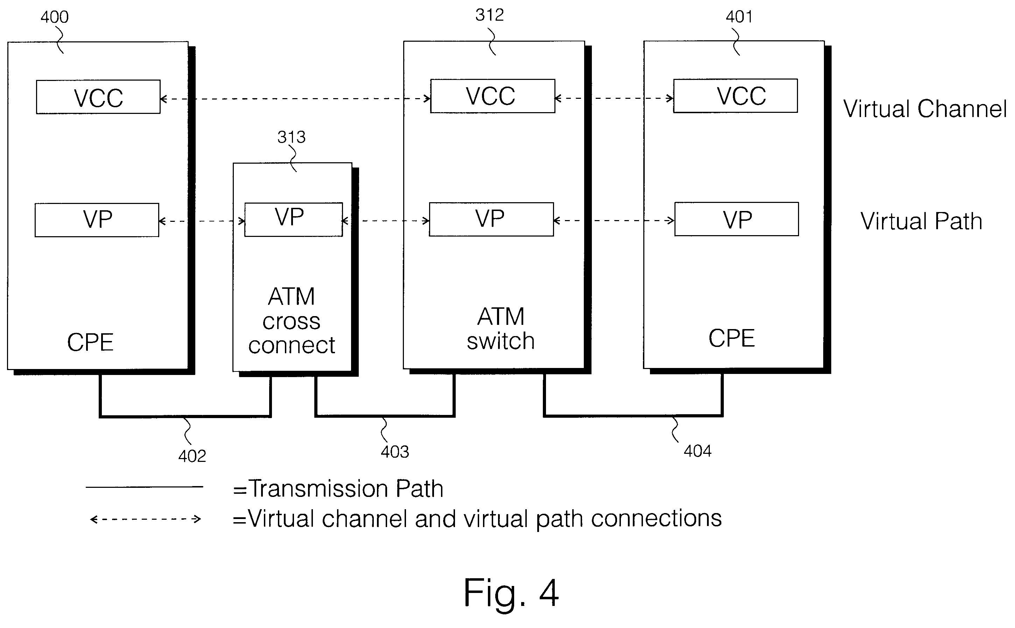

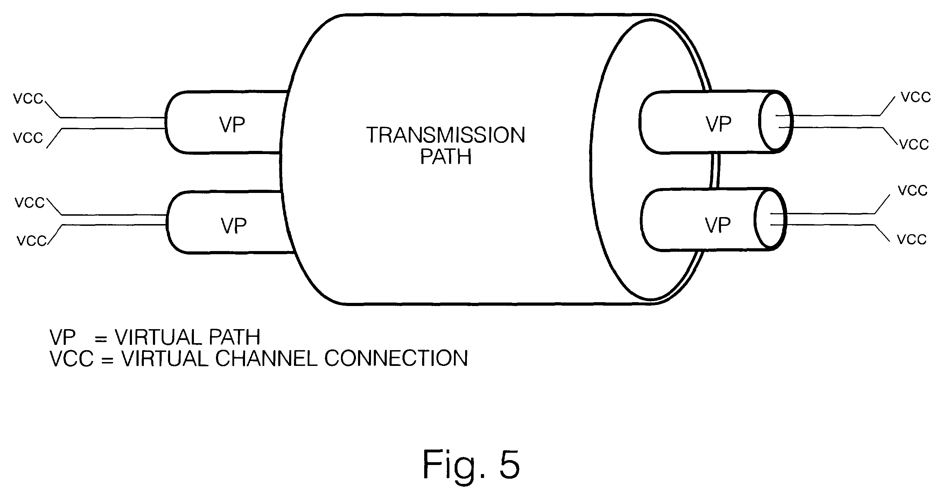

Whilst Fig. 2 illustrates a generalized communications network, there will be now described operation of specific embodiments and methods according to the invention in the context of an asynchronous transfer mode (ATM) network. In a network comprising many different types of node device, perhaps made by different manufacturers, the data traffic handling capacity of devices will differ from device to device and the type and availability of data signals describing operation of the node devices will differ from device to device. The network may comprise one or more network controllers or network managers 201, 202. The network controllers may typically store a network model data describing the number of node devices and link devices comprising the network, and their types. Each node device, which may comprise a switch or a cross-connect in an ATM network, generates data signals describing its own operation Such data signals may be used to monitor operational parameters describing operations of the network and its elements. The operational parameters include performance parameters describing performance of node devices, performance of components of node devices and performance of services and connections across the network. Depending upon the type of node devices in the network, the network controller may store the operational and performance data generated periodically by the node device, describing operation of the node device. For example a Concorde System Manager® available from Northern Telecom Limited of World Trade Center of Montreal, 380 St Antoine Street West, 8^{th} Floor, Montreal, Quebec H2Y 3Y4, Canada is an example of such a network controller. An example of a node device is the Concorde® witch also available from Northern Telecom Limited. Such a switch comprises a switch fabric, being a highly complex switching device which carries out switching of connections and communications, and a plurality of Ax cards which contain buffers in which cells of communications data are stored prior to entering the switch fabric. The Concorde switch generates various types of performance data signals describing operation of the switch fabric and Ax cards, and thereby describing performance of the switch and its individual components. ATM switches are sophisticated equipment items which provide customers with a wide variety of data transmission services ranging from video links to audio telephone links. As shown in Figs. 3 and 4 herein, an ATM wide area network (WAN) has a layered structure. A physical equipment layer comprises node devices and link devices, for example optical fiber links 300-302, radio links 303, regenerators 304 and line terminators 305-310, and switch or cross-connect apparatus, and physical customer equipment. Devices comprising the physical layer equipment operate to interconnect with each other to provide virtual channels and virtual paths defined by ATM standards comprising an ATM layer The ATM layer can be thought of as a service layer or connection layer in which services and connections of the network can occur. A connection which is established between the customer premises equipments (CPE) 400, 401 is called a Virtual Channel Connect (VCC). The end points of a Virtual Channel Connection, where the customer equipment are attached are called Virtual Channel Connection End Points (VCCE). A Virtual Channel Connection is made up by concatenating virtual paths (VP) which may themselves traverse more than one physical transmission path 402-404. A transmission path may be made up of more than one digital section, a digital section comprising an optical fiber, radio or other physical transmission means. Virtual paths and virtual channels are supported by ATM switches, and ATM cross-connects 311, 312, 313. ATM switches support connection and switching of virtual paths and virtual connections, however an ATM cross-connect apparatus possess switching functionality only at the virtual path level. A virtual path carries a plurality of virtual channels as shown conceptually in Fig. 5 herein. Various operational or performance parameters are of interest in monitoring an ATM network. In the monitoring of the performance of an ATM communications network, the Quality of Service is of primary concern. It is essential for the provider of a network to ensure that the customer is receiving the quality of service which the customer has paid for, whether this be a premium constant bit rate (CBR) service required for video links, or a variable bit rate (VBR) service often provided for audio telephone. It is also important that the customer can independently determine the Quality of Service that they are receiving, irrespective of their technical literacy having regard to the specific technicalities of the ATM network.

Traffic and congestion control in ATM networks is achieved using measures laid out in ITU-T Recommendation I.371. Parameters which are specified when setting up an ATM connection across a network include:
- Peak cell rate (PCR) required
- Sustainable cell rate (SCR) required (ie the minimum persistent transport required)
- Burst cell rate (ie the maximum cell rate)
- Quality of Service (QoS)

In order to remain competitive, manufacturers have to guarantee provision of a specified Quality of Service (QoS) which customers may wish to independently verify. Quality of Service parameters are defined in the ATM Standards available from ITU Sales and Marketing Service, Place des Nations, CH-121, Geneva 20, Switzerland or from the ATM Forum, 2570 West El Camino Real, Suite 304, Mountain View, California C190404, USA and are defined in terms of equipment performance parameters. Of particular interest in monitoring quality of service in a ATM network, three main parameters indicate network performance across all network layers. Such parameters are:
- Cell loss ratio (CLR)
- Cell delay variation (CDV)
- Cell transmission delay (CTD)

Cell loss ratio (CLR) is a measurement of the traffic cells flowing in the network which become discarded. Cells may become discarded for two reasons. Primarily, cell discard may occur due to congestion in the network, ie at any given time there is insufficient bandwidth available to transmit all the traffic which is flowing or attempting to flow. In simple terms, this means that switches operate a method of policing channels and disallow passage of cells from users who are exceeding their traffic contract specified cell criteria, in order to maintain Quality of Service of other users of the network. A user's cells may become lost due to rejection by node devices operating cell discard policies in accordance with a customer's traffic contracts. Cell loss ratio is a good indication of how much traffic is flowing though a network, and whether the bandwidth allocated to specific traffic communications adequately supports the customer's required usage. The allowable cell loss ratio measurement depends upon the type of traffic concerned. For example voice traffic is not as sensitive to cell loss as is video traffic. Cell delay variation (CDV) provides an indication of how congested the network is, by providing a measure of the time taken for a bi-traversal of a signal through the network. The value of cell delay variation is dependent upon the type of traffic concerned, however in general the smaller the value of CDV, the better. Cell delay variation is a measure of "Echo" in the network. Cell transfer delay (CTD) gives an indication of how long it takes a given type of traffic to be transferred from its source to its destination. Allowable values of cell transfer delay can vary dependent upon traffic type.

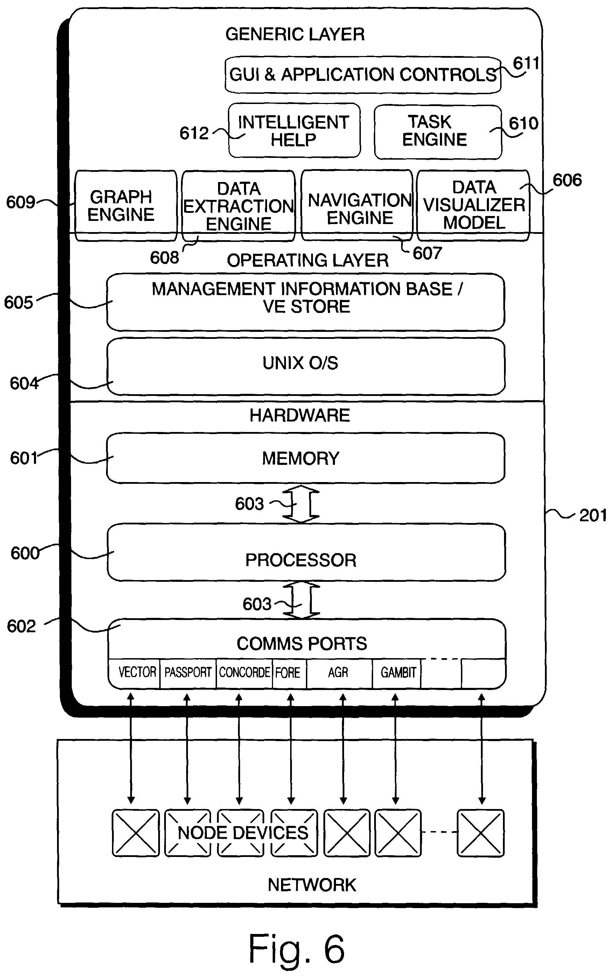

Referring to Fig. 6 herein, there is shown conceptually an architecture of a network controller apparatus capable of monitoring a communications network and collecting data signals describing operational parameters and performance parameters of the network. The network controller apparatus comprises a processor 600; an associated memory 601; a graphical user interface (GUI), and a plurality of communications ports 602 the processor, memory, GUI and ports connected by a BUS 603. The memory 601 comprises an element of volatile memory, for example Random Access Memory (RAM), and an element of non-volatile memory, for example hard disc memory, typically of capacity tens of Gigabytes. The processor and memory operate in accordance with an operating system, for example the known UNIX operating system 604. In the specific embodiment described herein, the memory 601 is partitioned into a management information base/visualization engine store 605 which stores data concerning operation of individual network elements, for example switches and cross-connects, as will be described later in this document. The processor and memory are controlled in accordance with the operating system 604, by a set of control modules which are generic to a number of different network controllers. The control modules each comprise an instructions set for controlling the processor and memory. The control modules comprises a data visualizer model 606 for storing and organizing data relating to network elements comprising the network; a navigation engine 607 for navigating through, searching, and identifying the data describing the network elements; a data extraction engine 608 for accessing and obtaining data describing operation of the network elements; a graph engine 609 for compiling and presenting data describing operation of the network elements in graphical format; a task engine 610 for filtering data describing network elements in the data visualizer model; a graphical user interface and application control 611 for displaying graphs and other information concerning the network elements and their operation; and an intelligent help module 612 for providing a user with help messages and interactive assistance in operating the monitoring apparatus.

The node devices of the network are of various types, and give rise to various types of data describing their operation. For example, a network may comprise Vector® switches available from Northern Telecom Limited, Passport® switches, Concorde®, Fore®, AGR®, or Gambit® switches all available from Northern Telecom Limited. Certain switches, for example the AGR®, type may transmit ATM traffic within the synchronous digital hierarchy (SDH) communications protocol. Even within a range of switches made by a same manufacturer, there are necessarily differences in the data which is available from the switches, describing the operation and performance of the switches, due to the different architectures and features of the different switch types.

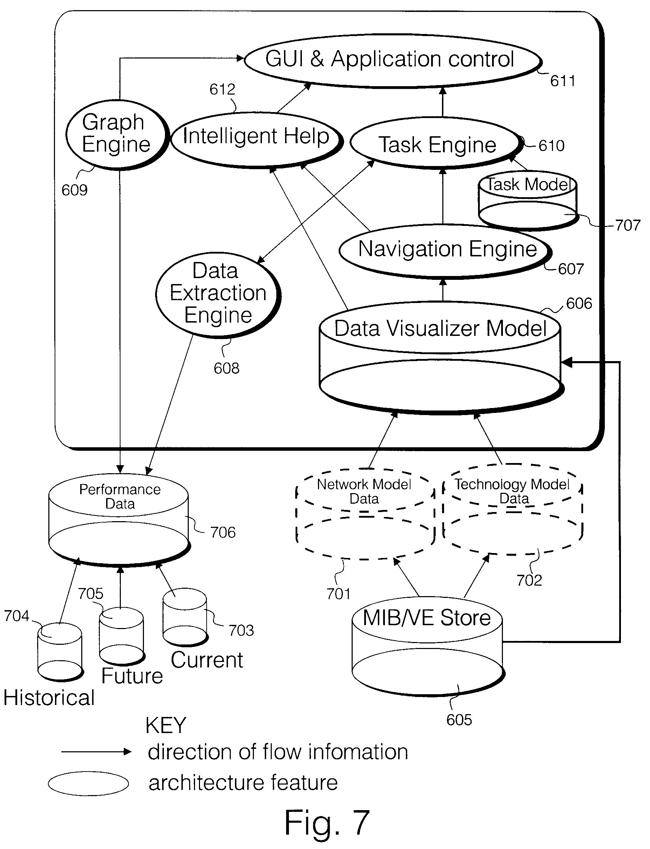

Referring to Fig. 7 herein, there is shown conceptually a functional overview of the monitoring apparatus comprising the network controller. The management information base visualization engine store 605 stores a network model data 701 describing the individual switches and cross-connects and other node devices comprising the network, and their interconnections with each other, and the various link devices linking the node devices. The network model data 701 is effectively a map or plan of the communications network. The network model data describes the interrelationship of components, both physical and logical from which performance measurements may be taken. A technology model data 702 describes specific types of data signals available at each node device for describing operation of that node device. For example in the Concorde switch data signals describing the cell loss on individual buffers of the Concorde switch are dumped every 15 minutes onto the management information base 605 of the Concorde system manager, ie data signals are generated describing the cell loss for each individual buffer in the Concorde switch. Additionally, every 15 minutes the Concorde switch dumps data signals describing the cell loss of the switch as a whole, ie the sum of the cell loss for all components in the switch. The technology model data 702 stores a list of the operational and performance parameters for which appropriate data signals can be accessed for each switch type in the network, for example in the case of the Concorde switch, the technology model data contains information that data signals describing cell loss of each Ax card of the switch are available, and data signals describing cell loss of the switch as a whole are available. Other types of switch, for example Passport or Vector generate data signals describing cell loss on each individual buffer, however this information is not compiled into data signals describing cell loss on the switch as a whole. In some cases, data describing parameters of the switch are not automatically dumped, but must be obtained through active interrogation of switch. For a switch to support a performance parameter describing its operation such as cell loss ratio (CLR), the switch must be capable of generating signals describing the cell discard, ie the number of cells lost, and signals describing the cell throughput, in order to calculate the cell loss ratio. Thus, the cell loss ratio parameter may be supported at an individual component level, ie at the level of individual buffers and line cards, or at a nodal level, ie concerning the switch as a whole. The technology model data 702 contains a list of each switch type, together with the corresponding parameters which are support for that switch, and the level at which those parameters are supported, ie at the individual component level, and/or at the nodal level. As new switches or node devices are introduced to the network, both the network model data 701 and the technology data 702 are updated to include details of the new node devices, their connections with the rest of the network, and the type of operational parameters for which they generate supporting data signals.

Data signals describing operation of the switches may comprise current data 703, generated in real time, for example every 15 minutes in the case of the Concorde switch or accessed in response to an interrogation signal and available to a user on a time scale of seconds or minutes; historical data 704 comprising for example previous data dumps, eg data dumps automatically generated every 15 minutes over an 8 hour period, and stored on the management information base 605 of the network controller or at an individual node device, or stored data generated in response to previous data interrogations; and future data 705 being a prediction of future operational data, for example a prediction of future utilization of a permanent virtual circuit generated by a prediction module. The current, historical and future data comprises performance data 706, some of which may be stored on the management information base, and some of which may be accessible in real time or with varying time delays by interrogating individual switches, or by requesting the information from prediction modules. The technology model describes the viewable parameters which are available at each node device or component of a node device and at each of the ATM layers. So, for instance in the ATM technology, the technology model data would state that cell loss ratio, cell delay variation, and cell transmission delay are the viewable parameters for a permanent virtual circuit.

Since the volume of data generated by node devices in enormous, for example an ATM network may generate 90MB of data every 15 minutes, or of the order of 10 Megabytes of data per day, the problem of searching though the performance data and converting performance data into meaningful format understandable by a network user is non-trivial. The data visualizer model 606 is set up to arrange the network model data and technology model data in a three dimensional data space, and a user may search and navigate through the network model and technology model data describing the network using the navigation engine 607. In order to simplify navigation through the data visualizer model, the task engine 610 provides a tool which allows that the user may follow a sub-set of a large number of possible paths through the network model data. The task engine applies a mask to paths through the network model data which are made available to the navigation engine, and hence filters out certain paths through the network available using the navigation engine. Preferred paths through the network model data are defined, and stored as a task model 707 which the task engine uses to determine appropriate paths. For example, a novice user may be presented with a restricted set of paths through the network model data, whereas a more expert user may be allowed to browse anywhere in the network model data. The task engine 610 may allow quick and easy traversal of the network model data in a single step, rather than requiring that the user performs many steps at the GUI and application control 612.

The performance data describing operation of the node devices may be readily available at the management information base 605 of the network controller, or may be available on individual management information bases of respective switches. Under control of the application control 611 performance data may be accessed by the graph engine 609, having been located by the data extraction engine 608 operating under control of the task engine 610. The data extraction engine 608 may be able to extract certain types of data directly from the management information base 605. In other instances, for example where a particular data source, eg a particular type of switch device only supplies performance data signals in response to direct interrogation, the data extraction engine 610, which may be configured to have an equipment specific element, eg specific to the type of node device concerned, may generate the necessary interrogation signals for interrogating the data source, resulting in the data source generating the required performance signals for use by the graph engine 609. The graphical user interface (GUI) 611 enables the user to select a particular type of available graph, which best describes the performance parameter under inspection. The technology model provides rules which enable the optimum method of visualization for each viewable parameter to be selected in order to observe network traffic trends. For example, the optimum graph types for a given set of performance data could be a two dimensional plot, a three dimensional plot or a Star plot.

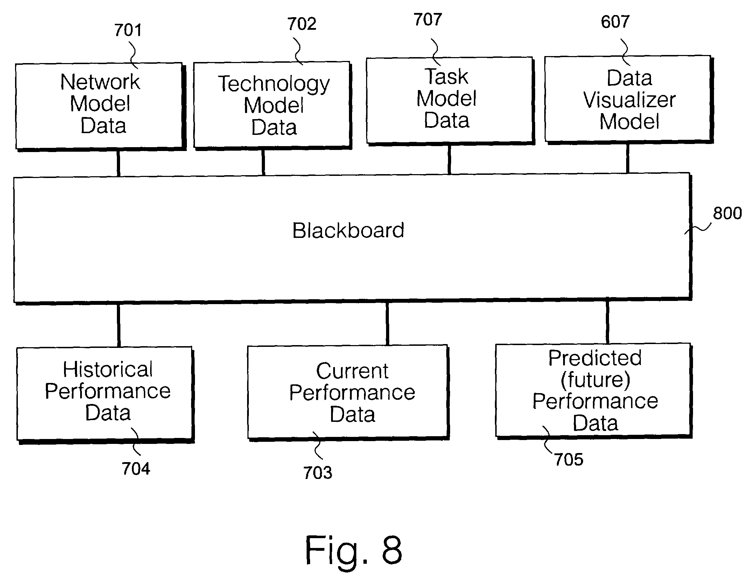

Referring to Fig. 8 herein, there is illustrated conceptually, a blackboard architecture of the network controller. In the blackboard architecture, the network model data 701, technology model data 702, historical, current and future performance data 703-705 and the task model data 707 are posted at a central memory location, the blackboard 800, from which they may be accessed by the generic control modules, comprising the data visualizer model 606, task engine 610, navigation engine 607 and graph engine 609.

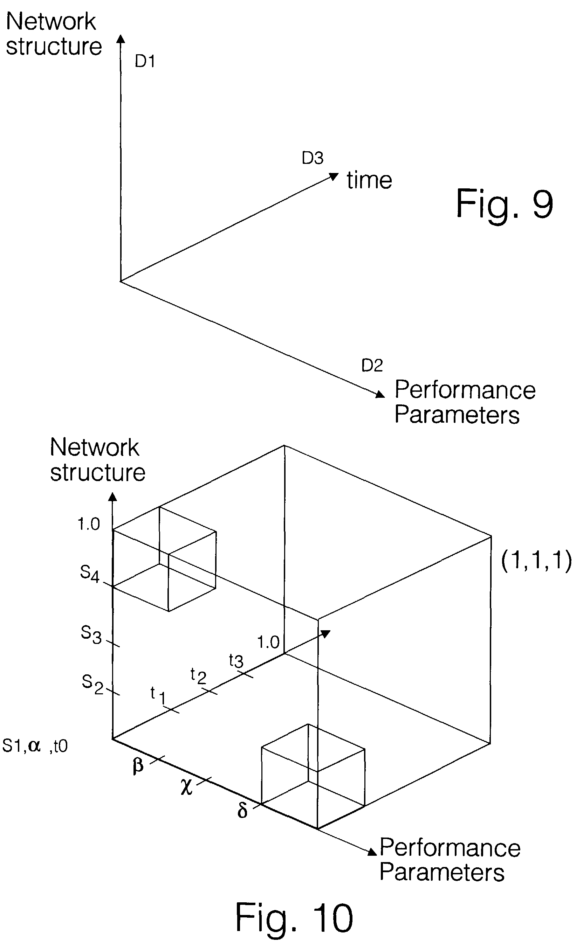

There will now be described in further detail structures and operation of the data visualizer model 606, and some of its relationships with the network model data 701, technology model data 702, graph engine 609 and graphical user interface 611. Referring to Fig. 9 herein, a portion of the memory of the network controller is allocated for the data visualizer model 606. The memory area is partitioned into a plurality of data locations, the data locations arranged to represent three separate dimensions D1-D3 in a data space, as shown conceptually in Fig. 9 herein. Various parameters of the network model data 701, and technology model data 702, are assigned interchangeably along the three dimensions of the data space. In data locations along a first dimension are stored data representing a structure of the communications network. In data locations along a second dimension, are stored data concerning performance parameters describing performance of the communications network and its constituent elements. In data locations along a third dimension are stored data representing time. Referring to Fig. 10 herein, a magnitude of each dimension of the data space is normalized by being set at a value of unity. For example along the dimension representing time, if the maximum storage capacity of any node device in the network, or of the management information base, dictates that parameter data extending over a time period of no more than 24 hours can be stored, for example in the case where no predicted future data is available, then the time dimension may commence at a value of zero for the present and extend to a value of unity, representing a time 24 hours previously. In a network where, for example four types of parameter can be inspected, eg parameter types α, β, χ, δ, then the performance parameter dimension is sub-divided into four data locations, one for each parameter, the magnitude of the dimension encompassing the four parameters having a maximum value of unity. Each of the data locations represents a point in data space which may be used as a viewing point from which to view other data locations. At any location in data space may be specified:
- A position in the network structure
- An inter-relationship of components from which the performance measurements have been taken or can be taken
- A set of operational or performance parameters viewable from that data location, ie viewable parameters for which data is accessible at each data location
- A selection of visualization methods which can be used to monitor each performance parameter, including suggestions for optimum visualization methods to enable network traffic trends to be observed.

For example, typical information relating to example data locations A-F in data space are summarized in table 1 herein.

**Table 1**

| **Position in Data Space** | **Performance Parameter** | **Graph in Type** |
|---|---|---|
| A | α | plot type 1 |
| | α | Plot type 2 |
| | α | plot type 3 |
| | β | plot type 1 |
| | χ | plot type 1 |
| B | β | plot type 1 |
| | χ | plot type 1 |
| | δ | plot type 5 |
| C | ε | plot type 4 |
| D | β | plot type 1 |
| | χ | plot type 1 |
| E | φ | plot type 2 |
| F | φ | plot type 2 |

The parameters types α, β, χ, δ, ε, φ may relate to any of the previously mentioned or other performance measurements available in the network such as cell loss ratio (CLR), cell transfer delay (CDT), cell delay variation (CDV), utilization, cell discard, etc. The plot types correspond to any of the mentioned plot types herein, eg two dimensional display, three dimensional display, Star plot, Contour surface plot.

Table 1 shows that at data location A in data space, performance parameters, α, β, and χ are available, and that these may be plotted using the graph types shown in the table. For example, plot type 1 may correspond to a two dimensional display, plot type 2 may correspond to a three dimensional display, and plot type 3 may correspond to a Star plot. Viewable parameter α may relate to the parameter cell loss ratio (CLR), viewable parameter β may relate to the parameter cell delay variation (CDV), viewable parameter χ may relate to the parameter cell transfer delay (CTD), other parameters δ may relate to other parameter such as cell discard, cell throughput, utilization of a virtual path, quality of service, etc at each data point A, B, C, D.

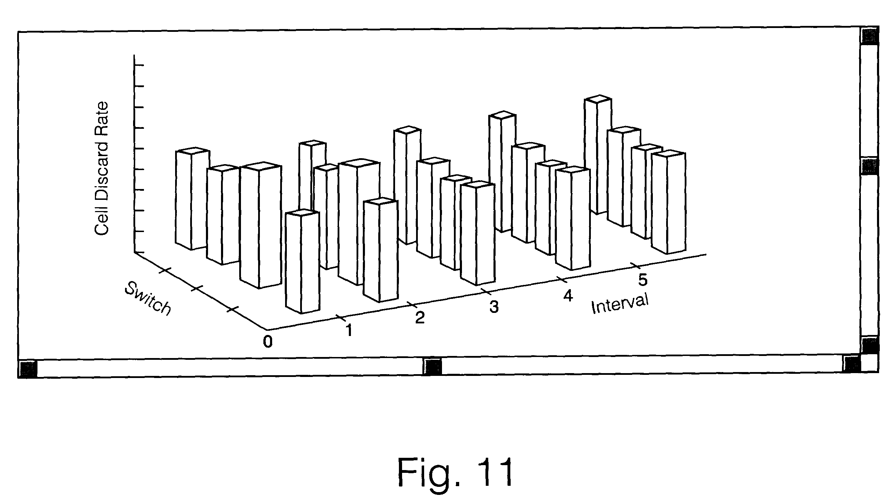

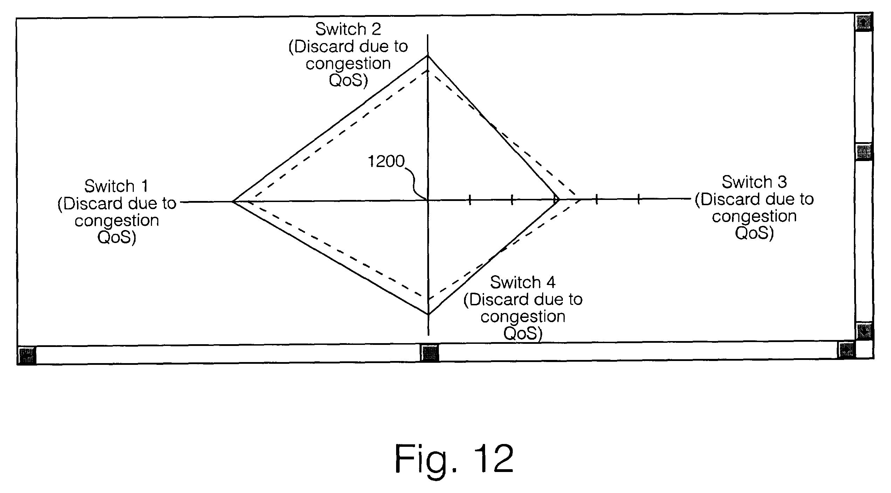

For example referring to Fig. 11, there is shown an example of three dimensional display produced on a monitor of the graphical user interface. The parameter described, cell discard rate, is plotted on a vertical axis, whereas the time interval is plotted on an horizontal axis for each of four separate switches at separate nodes of the network. Referring to Fig. 12 herein, there is shown an example of a Star plot. In the Star plot, the parameter, in this case cell discard, is plotted radially outwardly from an origin 1200. The symmetry of the resultant plot, where switches 1-4 are plotted angularly equidistantly spaced about the origin, enables a quick and easy comparison of cell discard between switches by visual inspection of the symmetry of the resultant plot.

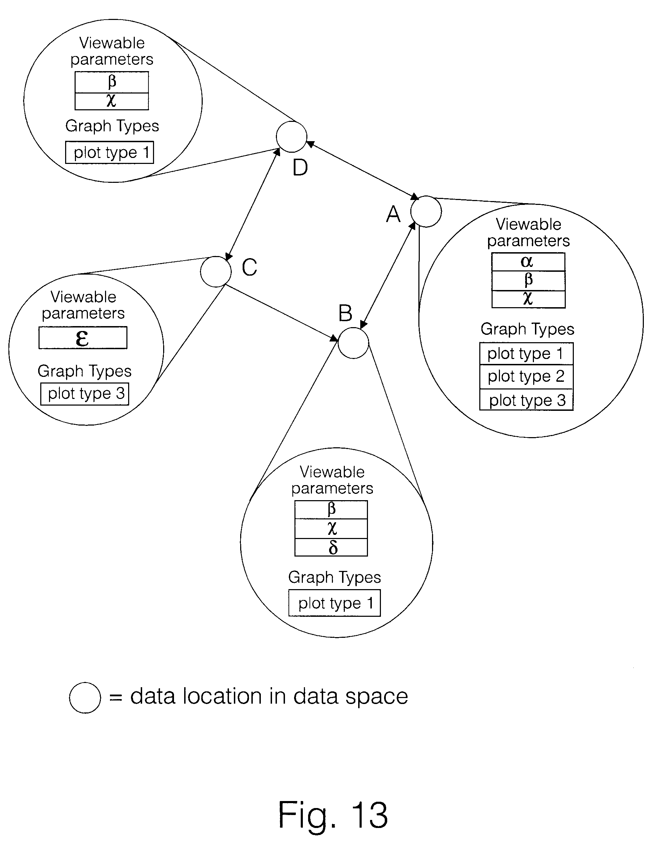

In Fig 13. there is shown conceptually sets of viewable parameters and graph types which are viewable from individual data locations. Data describing the structure of the communications network is assigned to data locations along a dimension of the data space. For the purposes of monitoring, an ATM network can be thought of as consisting of three main layers:
- A service layer, in which different services across the network can be monitored
- A connection layer, in which individual connections across the network can be monitored
- An equipment layer, in which physical node equipment can be monitored

The service layer includes for example a permanent virtual circuit (PVC) as shown in Fig. 3. The connection layer comprises many virtual paths (VPs) which are collections of virtual circuits, a number of virtual paths constituting a permanent virtual circuit (VPC). The equipment layer typically consists of the switches which contain switch control cards, eg Ax cards and switching fabric cards, which in turn have traffic queues associated with them. The switch control cards and Ax cards and their constituent components comprise a component layer of the network being a sub-layer of the physical equipment layer.

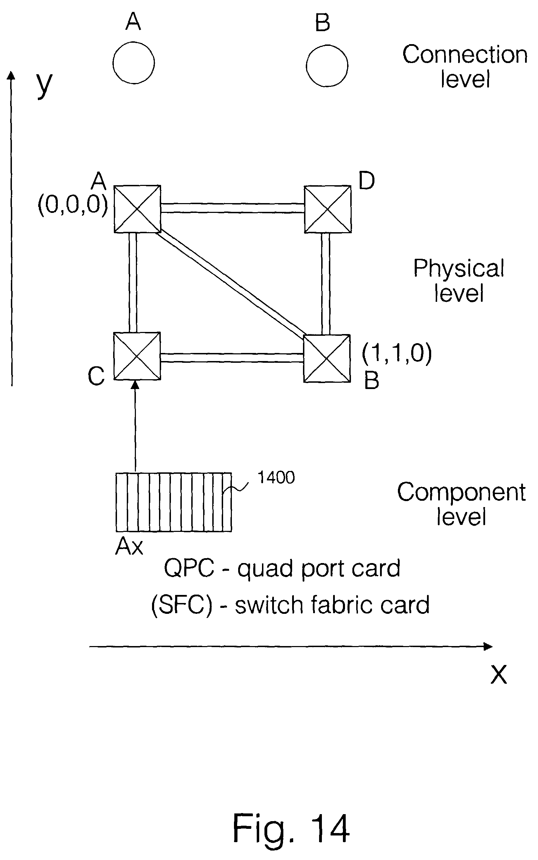

Referring to Fig. 14, there is illustrated schematically data describing the network structure, stored along two dimensions of the data space. Along a first dimension X is assigned data concerning the network structure. For the purposes of the data visualizer model, the network is divided into three levels, a connection level, a physical level, and a component level. The connection level encompasses data describing the ATM service and connection layers, the physical level encompasses data describing operation of node devices, and the component level encompasses data describing operation of individual components of node devices. In the connection level, data entries are stored representing parameters such as connectivity between adjacent node devices, connection of virtual paths, and connection of virtual circuits between node devices. Examples of data parameters which may be stored in the connection level are given in table 2 herein.

**Table 2**

| **Connection Level Parameters** |
|---|
| - Node device type |
| - Link device type |
| - Connectivity between node devices and link devices |
| - Virtual paths across network or between devices |
| - Bandwidth of paths and connections across network or between node devices |
| - Permanent virtual connections across network or between node devices |
| - Cell loss ration (CLR) of a path or connection |
| - Cell transfer delay (CTD) of a path or connection |
| - Cell delay variation (CDV) of a path or connection |

In the physical level are stored data describing the node devices, eg switch type, cross-connect type etc. In the component level, are stored data describing components of the node devices, for example the Ax cards, Quad port card (QPC) components, Switch fabric card (SFC) components, or buffers in the node device. A list comprising parameters viewable at the physical level is included in table 3 herein.

**Table 3**

| **Physical Level Parameters** |
|---|
| - Node device type |
| - Other node devices related to a node device |
| - Cell loss ration (CLR) of a node device (switch or cross-connect) |
| - Cell transfer delay (CTD) of a node device |
| - Cell delay variation (CDV) of a node device |
| - Cell loss of a node device |
| - Quality of service QoS of a node device |
| - Switching capacity of a node device |
| - Permanent virtual connections supported by a node device |
| - A proportion of time when errors occur on all channels of a node device |
| - A number of line code violations at a node device |
| - A number of line protection switches occurring at a node device |

A list comprising parameters viewable of the component level is included in table 4 herein.

**Table 4**

| **Component Level Parameters** |
|---|
| - Component type |
| - Bandwidth of an individual connection supported by a component |
| - Cell loss on component, eg of a line card |
| - Cell throughput of a component, eg of a buffer |
| - A propagation of time when severe errors occur , eg a line channel component |
| - A number of line code violations of a component, eg a line card |

In Fig. 14, there is illustrated by way of example only, a simple communications network comprising four node devices stored at data locations, A, B, C, D. The four node devices are represented in two dimensions X, Y at a discrete point in time. Time may be represented along a third dimension Z (not shown in Fig. 14). Each node element occupies a data location within a unitary cuboid data space. For example, node element A occupies a data location at co-ordinates (0, 0, 0), whereas node element B occupies a data location (1, 1, 0). The last coordinate represents the time coordinate, in this case being zero representing the present time. Each node element comprises a plurality of components or sub-components 1400. Also shown conceptually in Fig. 14, are the node devices A, B in the connection level. At the connection level, by specifying a two dimensional location of a node device, connections with other node devices can be inspected. By specifying time as a third parameter changes in connectivity with other node devices over time can be monitored.

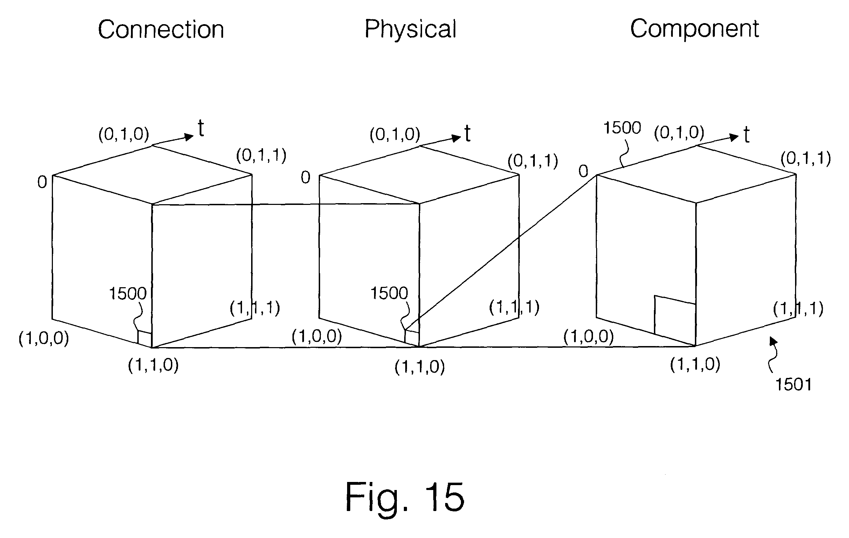

Referring to Fig. 15 herein, there is shown a relationship between different data levels within the multi-dimensional data space. Taking as an example a communications network comprising a hundred individual node devices, these are represented along first and second dimensions in multi-dimensional data space in Fig. 15 as a 10 x 10 array. In two dimensions, each node device is assigned to a two dimensional data location, for example (0.4, 0.5) or (0.9, 0.9) with the third dimension representing the available operational parameters. In Fig. 15 herein, a data location 1500 for a single node device is shown in the connection level, physical level, and component levels respectively. In the component level, the data location for a single node device comprises a cube of unity magnitude. In the physical layer, the network of one hundred node devices fill a cuboid data space of magnitude unity.

As each node device comprises a plurality of components, at the component level each component has a data location in a cubic data space of magnitude unity. For example, where a first node device comprises 16 line cards or 16 Ax cards, each Ax card is assigned a two dimensional location. For example a node device having 16 line cards is represented as a 4 x 4 array filling two dimensions of a three dimensional data space 1501. Thus, at a two dimensional location (0.9, 0.9) representing a particular node device, at the physical level there may be an individual Ax card having a two dimensional location (0.75, 0.75) at the component level. For a second node device at an adjacent two dimensional location (0.8, 0.9) at the physical level, such a node device may have 64 components, represented as an 8 x 8 two dimensional array filling a unit cube at the physical level. Each component fills a respective unit cube at the component level. At each data location are stored data identifying the available viewable parameters and preferred display types for inspecting performance data relating to the node device or component represented by that three dimensional data location, as shown in Fig. 13 previously.

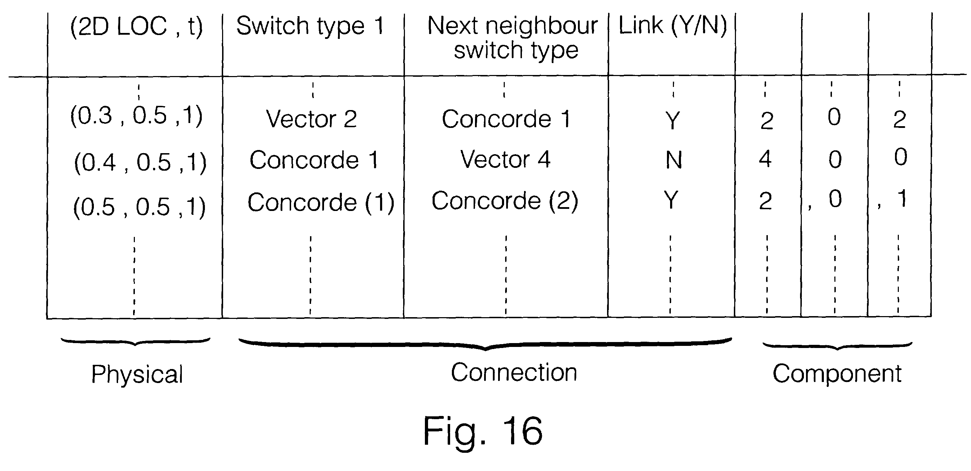

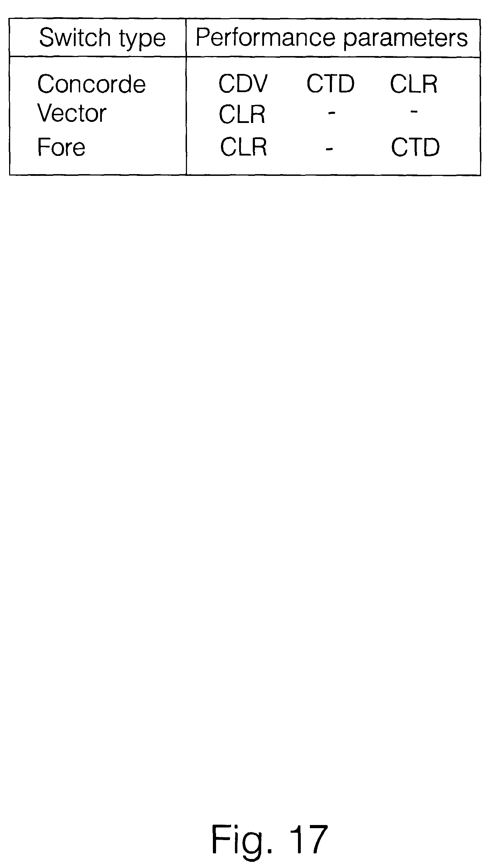

Referring to Fig. 16 herein, there is shown schematically a representation of data stored at a three dimensional location in three dimensional data space at the physical level. In Fig. 16, the data is arranged in the form of a table for clarity of description and understanding, although it will be understood that data is actually stored as electronic signals in a data storage medium, for example a hard disc comprising the management information base/visualization engine store 605. Fig. 16 illustrates a segment of a larger data base comprising the network model data 701 and technology model data 702. In a left most column in Fig. 16 is specified a location in three dimensional data space at the physical level for a plurality of node devices. For example a first node device is positioned at data location (0.3, 0.5,1) in three dimensional data space at the physical level. In a second column there is stored data concerning the type of node device at that data location, in this case a second Vector switch of the network. In a third column is stored information concerning a nearest neighbor to the switch, in this case the first Concorde switch in the network, Concorde 1. In the fourth column there is stored information concerning connectivity between the node device and its nearest neighbor, in this case the data entry indicates that there is a link between the Vector 2 switch and Concorde 1 switch. In the fifth to seventh columns are stored data representing performance parameters of the switch, for which performance data is available. The date stored in the fifth to seventh columns represents performance parameters, by means of a number. In order to find out what the number means, a look-up table is consulted, the look-up table comprising part of the technology model data 702. For example in the case of the node device at data location (0.5, 0.5, 1), at the physical level, data parameters 2, 0, 1, are available for inspection. Consulting the look-up table, an example which is shown schematically in Fig. 17 herein, shows that for the Concorde switch, parameter 0 represents cell delay variation, parameter 1 represents cell transfer delay and parameter 2 represents cell loss ratio. The data stored at data locations in the data visualizer model is not the actual performance data itself, but rather specifies which performance data is available, and where such performance data may be obtained. The actual data comprising the performance data needs to be accessed from its corresponding data source, eg the MIB 605, the individual switches, or the prediction modules. Table 5 herein lists example of data sources available in a typical ATM network from which operational parameters at the connection, physical and component levels can be determined.

**Table 5**

| **Data Sources** **Component Level** |
|---|
| - Periodically generated signals available from local databases of node devices, eg switches, or databases eg MIB of network controllers/network manager apparatus; current and historical, describing parameters comprising: |
| - Cell discard of a buffer component |
| - Cell throughput of a buffer of line card |
| - QoS offered on a connection |
| - Error rate through a line card |
| - Signals generated in real time by node devices in response to specific interrogation signals. |
| - Predicted signals of the above generated by prediction algorithms resident on a network controller/network manager. |

| **Physical Level** |
|---|
| - Periodically generated signals available from local databases of node devices, eg switches, or at databases (eg MIB) of network controller/network manager apparatus describing current and historical nodal parameters, comprising: |
| - Cell discard of whole node device |
| - Cell throughput of a whole node |
| - QoS of a node device |
| - Overall error rate of a node device |
| - Signals generated in real time by node devices, in response to interrogation signals |
| - Signals compiled by network controller/network manager resident applications from component level signals describing node device performance characteristics. |
| - Predicted signals describing node device performance, generated by network controller/manager resident prediction algorithms. |

| **Global Level** |
|---|
| Network controller/manager resident data bases, eg MIB containing data describing parameters comprising: |
| - Connectivity of network elements to each other. |
| - Virtual path connections across network. |
| - Virtual channel connections across networks |

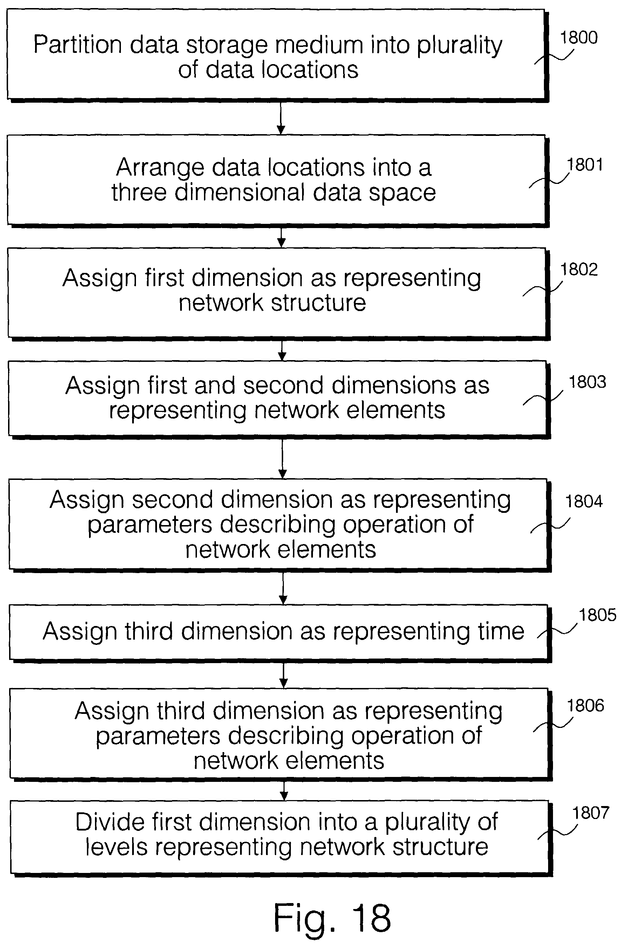

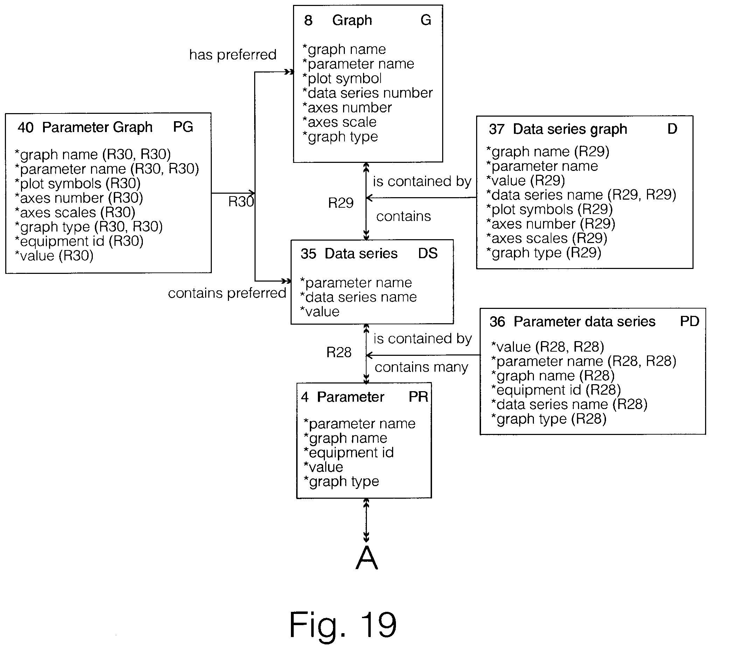

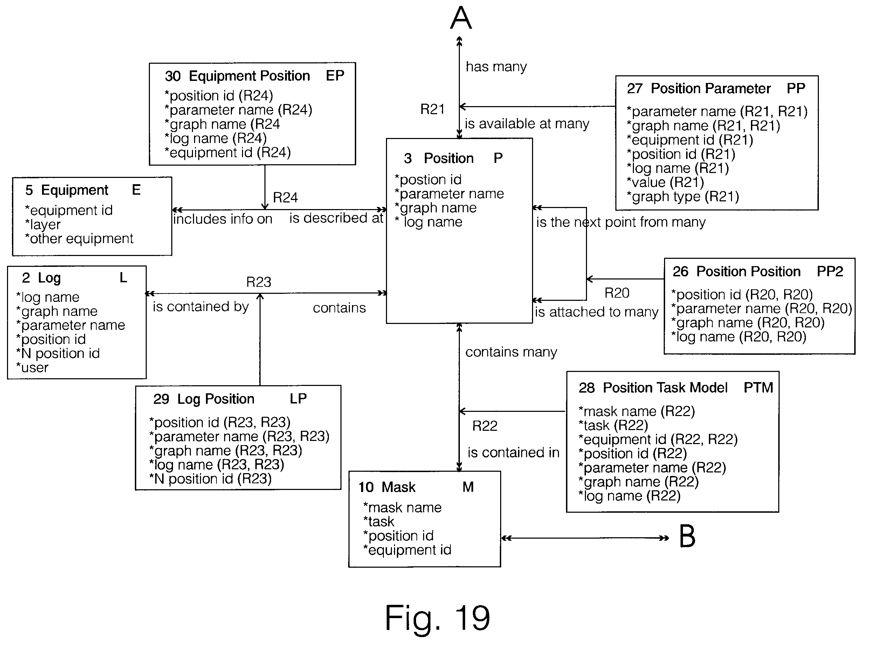

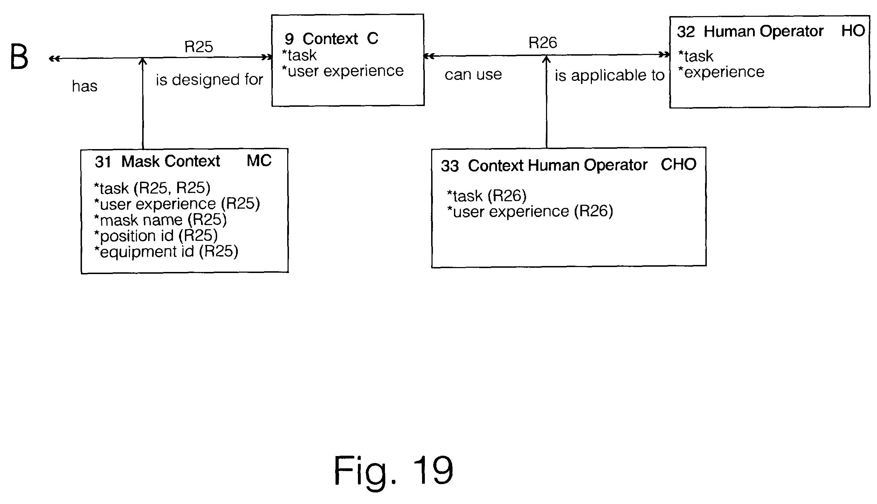

Referring to Fig 18 herein, steps of a data processing method for storing data of the network model data 701 and the technology model data 702 in the data visualizer model 606 are illustrated. Fig. 19 illustrates a Shlaer-Mellor information model for organizing data processing steps carried out by the control of module of Figs. 6 and 7 and as described in Fig. 18 herein. Structured details of a best mode of implementation in an object oriented language are described later in Fig. 19. Implementation of the data processing methods may be made by operating the processor, memory and management information base in accordance with an object oriented programming language, for example the known SmallTalk language. In step 1800 the data storage medium, for example hard disc is partitioned into a plurality of data locations by assigning specific memory addresses of the data storage medium as being data locations. In step 1801 each data location is represented by a class, called position in Fig. 19, the plurality of data locations are ordered into a three dimensional data space. A first dimension of the data space is assigned as representing a network structure in step 1802. This step is achieve by linking data concerning network structure with the data location. In step 1803, individual network element, for example node devices, switches, cross-connects, and components comprising the node devices, eg Ax cards, line cards, buffers, are assigned to first and second dimensions of the data space. This is achieved by configuring the data storage medium such that the data location is linked with data describing the network element. In step 1804 a second dimension is assigned as representing parameters describing operation of the network elements, such as performance parameters representing performance of the network elements. Performance parameters may appear as sub-classes of a position parameter object. In step 1805, a third dimension is assigned as representing time. Parameter data signals which are generated by the node elements either in current time, historically, or as predicted future data, each have an associated time data signal, corresponding to the time at which those performance data signals were generated, or are to be generated. Data identifying the time at which data parameters signals are generated are stored along a third dimension of the data space. In step 1806, parameters describing operation of the network elements may also be assigned to a third dimension of the data space. In step 1807, the first dimension of the data space is divided into a plurality of levels, each level representing a level of network structure as hereinbefore described. A data level extends over a plurality of data locations in the first dimension, and may extend over a least one data locations in each other dimension.

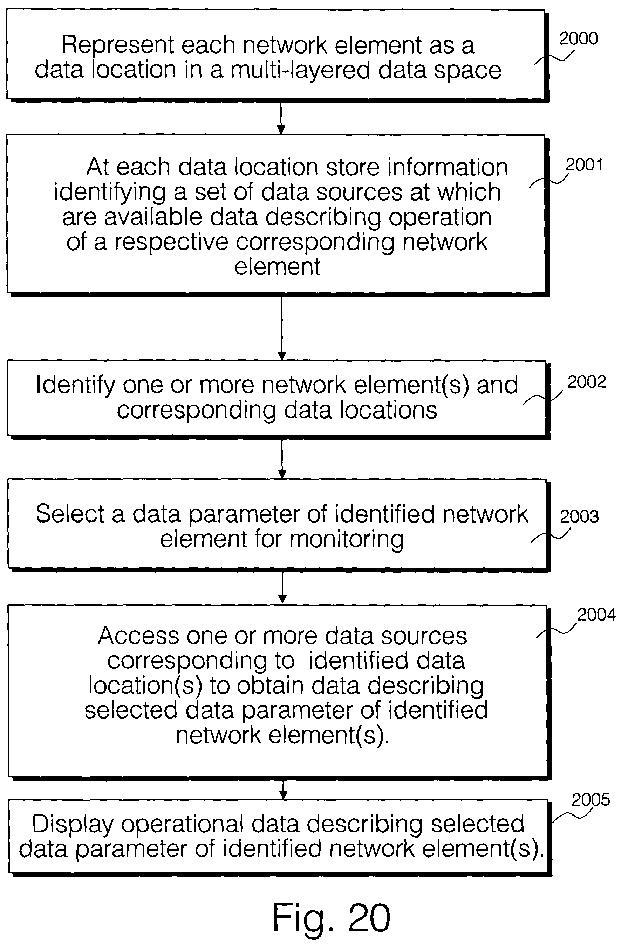

Referring to Fig. 20 herein, there is described an overall method for monitoring the communications network, implemented in part as a data processing operation by the monitoring apparatus. In step 2000, each network element is represented as a data location in a multi-layered data space as described herein above. At the data location for each network element is stored information identifying a set of data sources at which are available data describing operation of the corresponding respective network element, in step 2101. For example, the data comprising the network model data includes addresses of individual node devices and components, or addresses of data locations in the management information base, at which historical or current performance data can be accessed by the graph engine 609, or by the data extraction engine 608. The node devices and components, or the management information base, are the sources of performance data signals from which the actual performance data used to prepare plots and graphs is obtained. Other sources of data include the prediction modules, used for predicting future performance data 705. In step 2002 there is identified one or more network elements and their corresponding data locations in multi-dimensional data space by navigating the data space. A data parameter corresponding to the identified data location is selected in step 2003 for monitoring by the user. In step 2004, one or more data sources corresponding to the identified data location are accessed and the performance data describing the selected data parameter of the identified network element is obtained by operation of the data extraction engine 608, and/or the graph engine 609 operating under control of the task engine 610, navigation engine 607, and optionally, the intelligent help module 612. In step 2005, there is displayed performance data describing the selected data parameter of the identified network elements on the graphical user interface. The display is in the form of a two dimensional, or three dimensional plot or a Star plot, using data supplied by the graph engine 609.

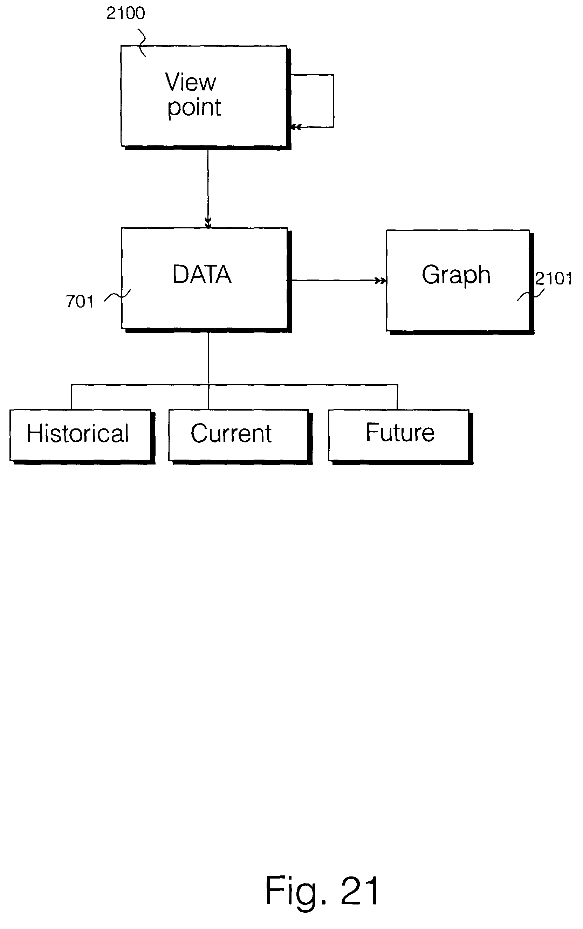

Referring to Fig. 21 herein, there are shown a functional arrangement of a portion of the monitoring apparatus. A view point navigator element 2100, comprising the navigation engine 607 operates to traverse a path through three dimensional data space to locate historical, current or future performance data from the data sources. The performance data is obtained from the data sources and formulated by the graph engine 609 into graph data for presentation at the graphical user interface 611.

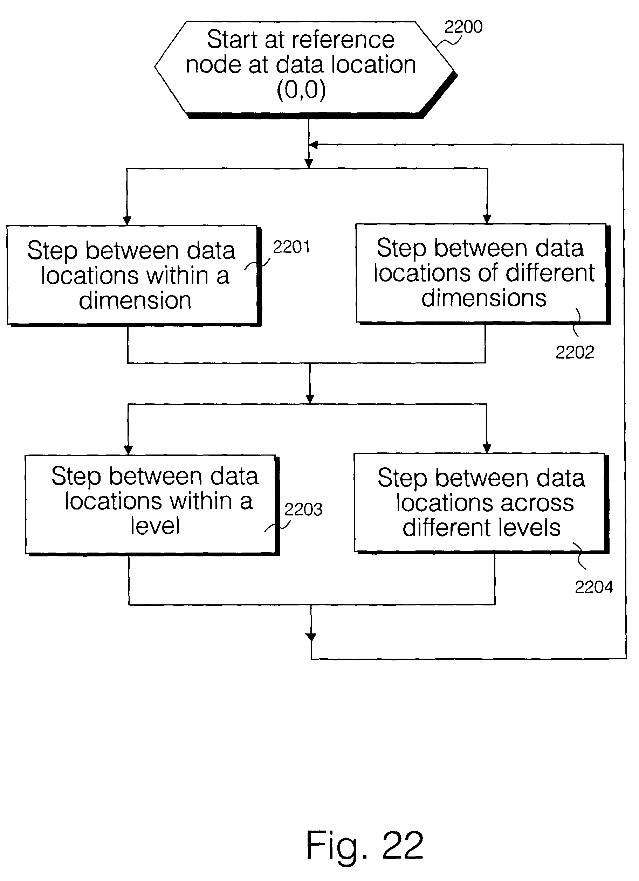

The viewpoint navigator element 2100 operates to search through the 3-D data space for selected node devices, components, connection, or performance parameters. A general search routine for searching through data locations in 3-D data space, implemented by the viewpoint navigator element is described in Fig. 22 herein. The navigation engine commences searching at reference node at 2-D location (0, 0) in step 2200. The viewpoint navigator element may step between different data locations within a dimension in step 2201, or may step between data locations of different dimensions in step 2202. The viewpoint navigator steps from data location to data location, by identifying data locations related to a current data location operated on by the viewpoint navigator, and by filtering related data locations in accordance with a task filter supplied by the task engine 610 from the task model data 707. In step 2103, the viewpoint navigator may step between data locations within a level, or in step 2104 may step between data locations across different levels.

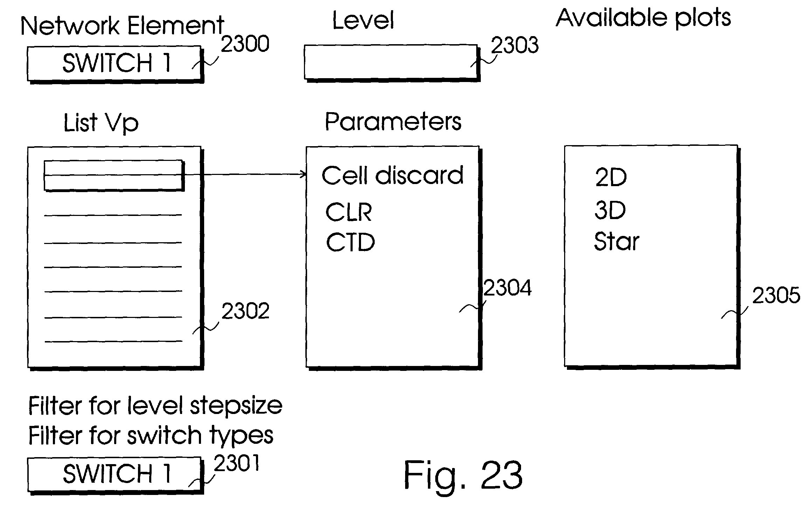

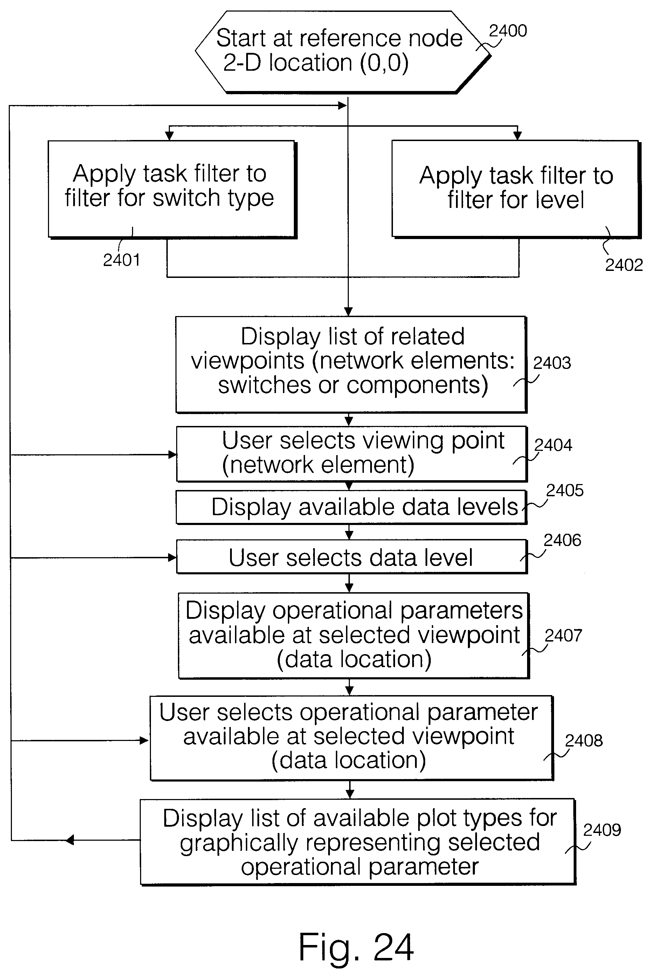

Referring to Fig. 23 herein, there is shown a display presented to a user at the graphical user interface for navigating across the network and through the node devices, components, and service connections of the network. The screen display of Fig. 23 is generated by the application control module 611. Known commercially available graphics packages may be used to construct a screen presentation as shown in Fig. 23, as will be understood by the person skilled in the art. A user may operate the graphical user interface in accordance with a specific method of the present invention as follows. The user may select by means of a keyboard of the GUI the type of network element to be monitored by selecting menu display 2300 using a pointing device eg a mouse or tracker ball, or by making a keyboard entry. The user may apply a task filter by selecting an entry from a menu display 2301 in similar manner. Referring to Fig. 24, in step 2400, the navigation engine 607 commences a search of data locations, beginning at a reference node corresponding to 2-D data location (0, 0). Selection of the switch type or level on menu display 2201 activates the task engine to receive a task filter model from the task model data 707 filtering either for switch type in step 2401 or for level in step 2402. The navigation engine searches the data space to locate 2-D locations related to the present 2-D location (the present viewpoint) and displays a list of related viewpoints (data locations) at which are stored related network elements or components, or service connections. The user highlights a displayed viewpoint using the pointing device or a keyboard entry, thereby selecting a viewing point in step 2404. Available data levels are displayed in step 2405 on a level display 2302, which can be used by the user to select the data level for inspection of performance parameters in step 2406. Available performance parameters which can be accessed at the viewing point selected are displayed in the parameter display 2304 for example performance parameters of cell discard, cell loss ratio, etc may be displayed in step 2407. In step 2408, a user selects a required performance parameter at the selected viewpoint, and the navigation engine displays in step 2409 a selection of plot types available at that viewpoint for that selected parameters on an available plot display 2305. For example there may be displayed that two dimensional plots, three dimensional plots, or Star plots are available for a parameter selected from the display 2304 at the viewpoint selected on the display 2302. By highlighting using the pointing device, an available plot type on the display 2305, a user may then display a graph of the appropriate type, as shown for example in Figs. 11 or 12 hereinbefore.

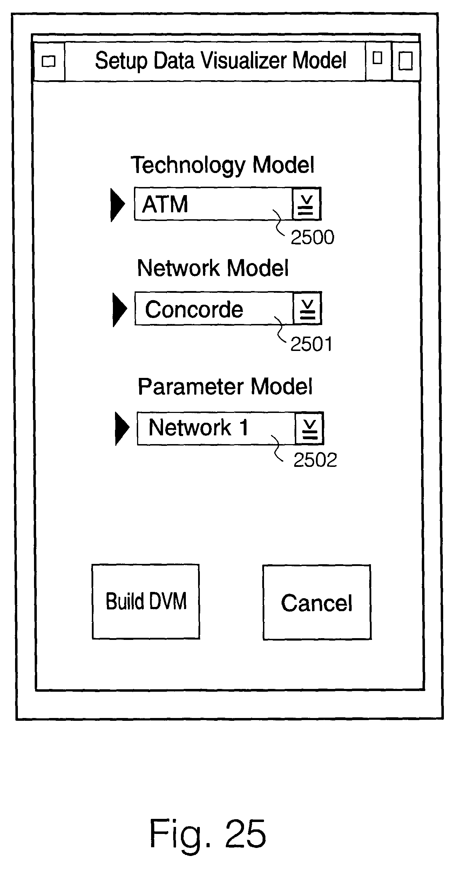

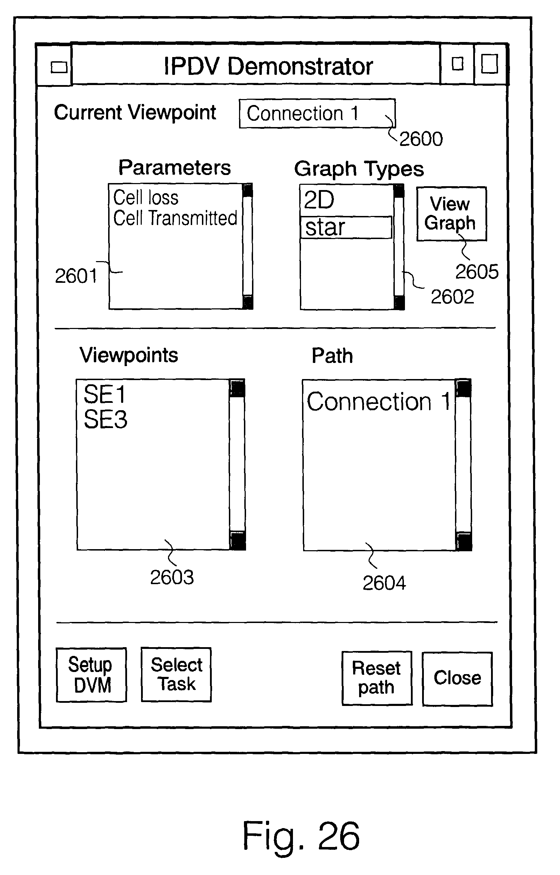

Referring to Fig. 25 and 26 herein, there is shown a second set of displays presented to a user at the graphical user interface for navigating across the network and through the node devices, components and service connections of the network. The displays of Figs. 25 and 26 are generated similarly as described herein with reference to Fig. 23. In Fig. 25, a user is presented with a pointing device activatable menu for selection of technology model 2500, network model 2501, and parameter model 2502. For example in the display of Fig. 25, a user currently is selecting the ATM technology and Concorde type switch.

Referring to Fig. 26 herein, a user is presented with a display of the current viewpoint within 3-D data space, in this case, connection one 2006, a parameter display 2601 for selection of parameters such as cell loss or cells transmitted, a plot type display 2602, a selection of alternative related viewpoints 2603, and a display of path 2604. A user may view a graph at any current viewpoint using a view graph selection indicator 2605.

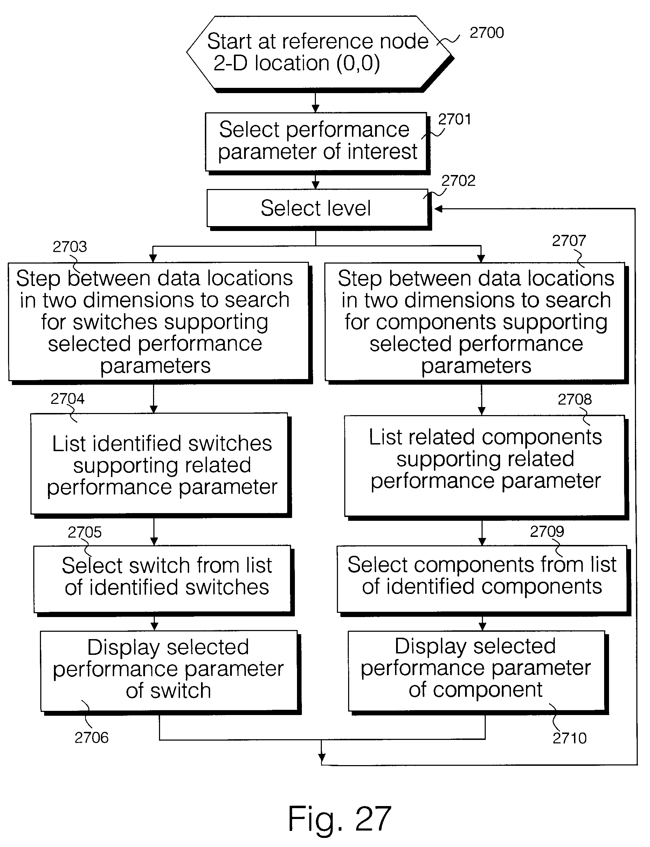

Referring to Fig. 27 there is illustrated operation of the navigation engine for searching along one dimension and across two other dimensions, and across levels in data space. In step 2700, the viewpoint navigator commences a search at a reference node at 2-D location (0, 0). In step 2701 a user selects a performance parameter of interest as described hereinbefore and in step 2702, selects a level of interest. Depending upon which level of interest is selected, either the connection level in which services can be inspected by the physical level in which node devices can be inspected, or the component level in which components can be selected, the viewpoint navigator steps between data locations related to the starting location (0, 0). Where the physical level is selected in step 2702, in step 2703 the viewpoint navigator steps between data locations in two dimensions to search for related data locations corresponding to switches supporting the selected performance parameter. In step 2704, a list of identified switches supporting the selected performance parameter is displayed and in step 2705, a user can select a switch from the list of identified switches. In step 2706, the user can display the selected performance parameter of the switch as hereinbefore described. Where the user selects the component level in step 2702, the viewpoint navigator steps between data locations in two dimensions to search for data locations corresponding to components supporting the selected performance parameter in step 2707. The viewpoint navigator finds data locations corresponding to the related components supporting the selected performance parameter and lists these in the display in step 2708. In step 2709 a user may select a component from the list of identified components and display the selected performance parameter of the component in step 2710 as hereinbefore described. The user may change the level selected in step 2702 at any time, and may change the performance parameter elected in step 2701 at any time.

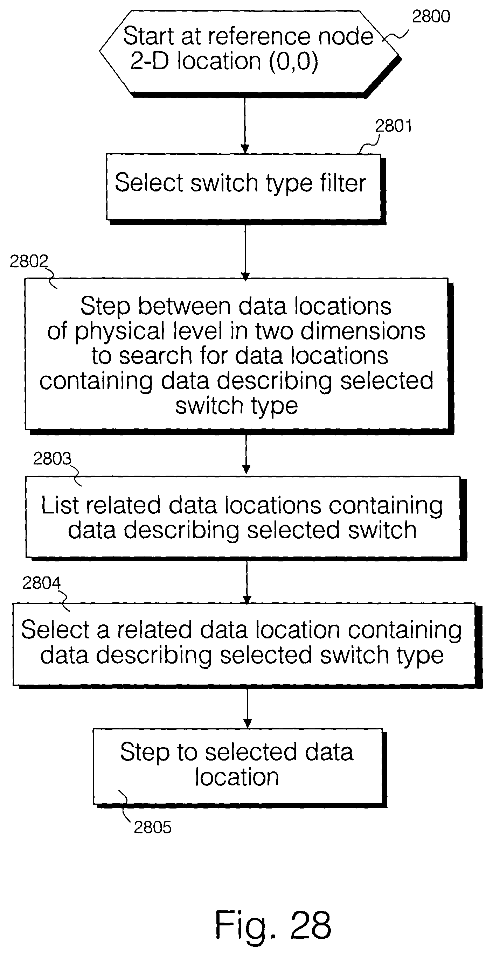

Referring to Fig. 28 herein, there is illustrated an example of operation of the viewpoint navigator in which searching across a level and between dimensions occurs. In step 2800 the navigator commences searching at a reference node at a 2-D data location (0, 0). In step 2801 the user selects a filter from the task engine for filtering a selected switch type. The navigator engine steps between data locations within the physical level in two dimensions to search for data locations containing data describing the selected switch type, in step 2802. In step 2803 the user is presented with a display of a list of related data locations containing data describing the selected switch and in step 2804 the user selects a related data location corresponding to a switch of the identified switches of the type filtered by the task engine. In step 2805 the navigation engine steps to the selected data location of the selected switch, from which the user may then select performance parameters, displaying these on their corresponding graph type, or may move to a further switch, navigating through the network, or may change level using the level display as hereinbefore described.

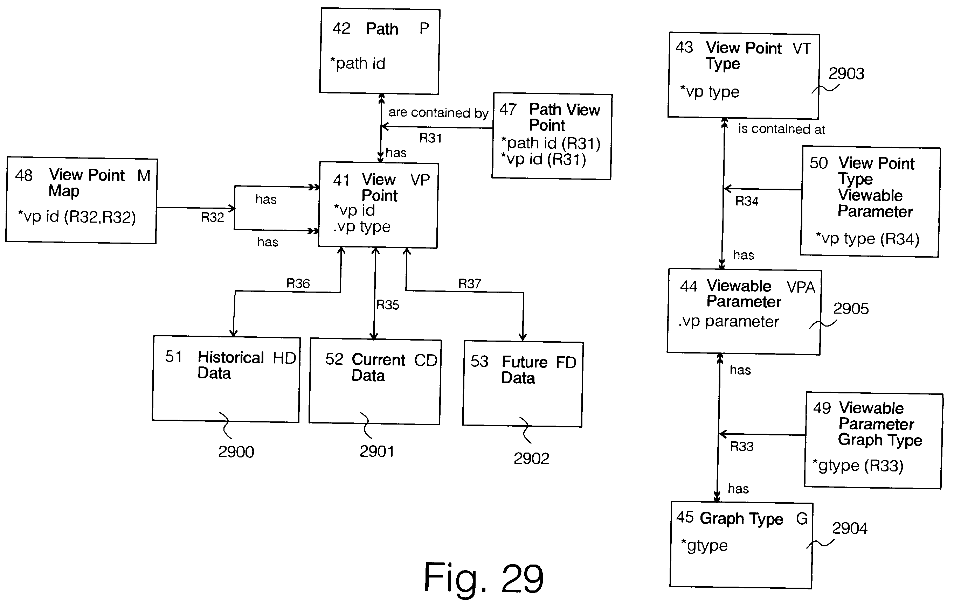

Implementation of the navigation engine and viewpoint navigator is made in the best mode herein, in an object oriented programming language by defining a set of objects. For example the processor may be configured in accordance with control instructions implemented in the SmallTalk programming language as shown conceptually in Fig. 29 herein. Fig. 29 illustrates a portion of a Shlaer-Mellor information model. Data sources are represented in a data class, of which sub-classes for historical data, current data and future data 2900-2902 respectively are created. The viewpoint 2100 has sub-classes of different types. Each viewpoint sub-class has viewable parameters and the viewable parameters are themselves sub-classed into different types of viewable parameter. For example there may be defined a function which instructs reading of a knowledge base For example a knowledge base concerning the Concorde type switch would result in the appropriate parameters for the Concorde switch being linked to the viewpoint of the Concorde type, and consequently, the appropriate graph types are linked also. The graph type 2904 would display the data according to which viewpoint type 2903 is available. Viewable parameters are represented by an object 2905, of which there are various sub-classes, for example cell loss ratio, cell transfer delay, etc. Each of these parameters cell loss, cell transfer delay etc are represented by an appropriate sub-class which includes a function which calls up an appropriate type of graph depending upon the value of the viewable parameter.

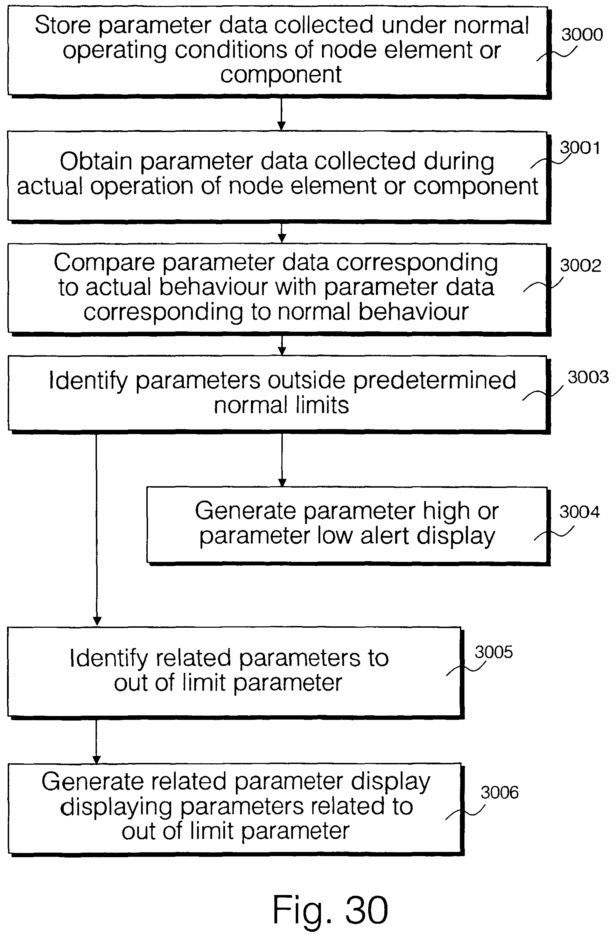

Referring to Fig. 30 herein, there is illustrated data processing steps describing functionality of the intelligent help module 612. The intelligent help module operates to suggest, by means of a visual display on the graphical user interface, related parameters of interest where the monitoring apparatus obtains performance data signals which are near or beyond a predetermined specified limit for the corresponding performance parameter. For example where it is found that at a particular switch one performance parameter is near its limit, the intelligent help module operates to locate and suggest other performance parameters which need to be looked at, since they also may be near their limits. The intelligent help module draws upon a database of stored relationships between performance parameters, linking performance parameters of interest. Such a data table is input from data collected from experienced network users and manufacturers specifications of node devices. Referring to Fig. 30, in step 3000 the intelligent help module stores parameter data collected under normal operating conditions of a node device or component. In step 3001, the intelligent help module stores parameter data collected during actual operation of a node element or component, perhaps under circumstances in which the performance parameter is near a predetermined limit due to congestion on the network. In step 3002 the intelligent help module compares the parameter data corresponding to the actual behavior of the network under present conditions with the stored parameter data corresponding to operation of the network under normal (non-congested) behavior. In step 3003, the intelligent help module identifies performance parameters which are outside the predetermined normal limits, by comparison of the presently obtained performance data with the stored performance data. The intelligent help module generates a parameter high or parameter low alert display in step 3004, and in step 3005 identifies related parameters to the out of limit data parameter, and in step 3006 generates a related parameter display which displays related parameters to the parameter which has been determined as being out of limit or near its limit.

## Claims

1. A method of processing data representing a communications network comprising a plurality of network elements, said method characterized by comprising the steps of:
partitioning a data storage medium (605) into a multi-dimensional data space comprising a plurality of data locations; and
for each network element, representing said network element at a said data location.

2. The method as claimed in claim 1, comprising the steps of:
dividing said data storage medium into a plurality of data levels (606 - 612), each said data level comprising a plurality of said data locations.

3. The method as claimed in claim 2, wherein a said data level extends over a plurality of data locations in a first dimension, and over at least one data location in another said dimension.

4. The method as claimed in claim 2 or 3, wherein each said data level is assigned a value of unity in each said dimension.

5. The method as claimed in claim 2, 3 or 4, comprising the steps of:
at a said data location of a first level, storing data identifying at least one related data location of a second level.

6. The method as claimed in any one of the preceding claims, wherein each said dimension is assigned a magnitude of unity.

7. The method as claimed in any one of the preceding claims, comprising the step of representing said network elements along a first dimension of said multi-dimensional data space.

8. The method as claimed in any one of the preceding claims, comprising the step of representing operational parameters of said network element along a second dimension of said multi-dimensional data.

9. The method as claimed in any one of the preceding claims, comprising the step of representing time along a third dimension of said multi-dimensional data space.

10. The method as claimed in any one of the preceding claims, comprising the steps of
at a said data location, storing data identifying a said network element; and
storing data identifying a set of operational parameters representing operation of said network element.

11. The method as claimed in claim 10, comprising the step of:
at a said data location, storing data describing addresses of a set of data sources at which data describing said operational parameters can be obtained.

12. The method as claimed in any one of the preceding claims, wherein a said network element comprises a node device.

13. The method as claimed in claim 12, comprising the step of:
at a said data location, storing data identifying data locations of a plurality of components of said node device.

14. The method as claimed in any one of the preceding claims, wherein a said network element comprises a component of a node device.

15. A method of monitoring data describing operation of a communications network comprising a plurality of network elements, said method characterized by comprising the steps of:
for each network element, representing said network element, as a data location in a multi-dimensional data space (2000);
at each data location, storing information identifying a set of data sources at which are available data describing operation of said respective corresponding network element (2001);
identifying at least one network element and its corresponding data locations (2002);
selecting an operational parameter of said identified network elements for monitoring (2003); and
accessing at least one said data source corresponding to said identified data location(s) to obtain data describing said selected operational parameter of said identified network elements (2004).

16. A method of searching data describing a communications network comprising a plurality of network elements, said method characterized by comprising the steps of:
partitioning a data storage medium (605) into a multi-dimensional data space having a plurality of data dimensions, said data dimensions comprising a plurality of data locations (1800);
for each network element, representing said network element as at least one said data location; and
searching said multi-dimensional data space by navigating through data locations within a said dimension and by navigating through data locations from a said dimension to another said dimension.

17. The method as claim in claim 16, further comprising the steps of storing data signals describing a structure of said network in a first said dimension, and storing data signals describing operational parameters of said network elements in a second said dimension (1804).

18. The method as claimed in claim 16 or 17, wherein said step of searching includes searching for said network elements by navigating between data locations of said first dimension, and between data locations within said second dimension.

19. The method as claimed in claim 16, 17 or 18 comprising the steps of:
partitioning a said data dimension into a plurality of data levels, each comprising a plurality of data locations; and
searching for said network elements by navigating across said data levels.

20. The method as claimed in any one of claims 16 to 19, comprising the steps of:
partitioning a said data dimension into a plurality of data levels, each comprising a plurality of data locations; and
searching for said network elements by navigating between data locations within a said data level.

21. The method as claimed in any one of claims 16 to 20, comprising the steps of:
partitioning a said data dimension into a plurality of data levels, each comprising a plurality of data locations; and
for each data location in first said level, identifying a set of data locations in a second said level.

22. A monitoring apparatus for monitoring a communications network comprising a plurality of network elements, said apparatus characterized by comprising:
a data storage medium (605) partitioned into a multi-dimensional data space comprising a plurality of data dimensions, each comprising a plurality of data locations; and
a searching means (607) for navigating between said data locations of said data storage medium,
wherein said searching means operates to navigate between data locations within a said dimension and operates to navigate between data locations across different said dimensions.

23. A communications apparatus characterized by comprising:
a data processor (600); and
a data storage medium (605) partitioned into a plurality of data locations for storing data signals, said data locations arranged in a plurality of data dimension, said apparatus operating to:
store data signals describing a structure of said network in a first said dimension (1802);
store data signals describing operational parameters of said network in a second said dimension (1804); and
store data signals representing time in a third said dimension (1805).

24. A network monitoring apparatus for monitoring a communications network comprising a plurality of network elements; said apparatus characterized by comprising:
a processor (600);
a data storage medium (605) partitioned into a plurality of data levels, each comprising a plurality of data locations, each data location corresponding to a respective network element; and
a navigation means (607) operating to navigate between said data levels and within said data levels to identify said network elements.

25. A network monitoring apparatus as claimed in claim 24, wherein a said data level comprises a three-dimensional array of data locations.

26. A method of storing data representing a communications network comprising a plurality of network elements, said method characterized by comprising the steps of:
for each network element, representing said network element as a data location in a multi-dimensional data space; and
at each data location, storing information identifying a set of related data locations corresponding to related network elements associated with said network element.
